# FASCICULE DE BREVET EUROPEEN

(11) **EP 1 035 351 B1**
(45) Date de publication et mention de la délivrance du brevet: **22.10.2003**
(21) Numéro de dépôt: 00400581.5
(22) Date de dépôt: 03.03.2000
(51) Int. Cl.: F16F 7/12

(54) **Absorbeur de chocs cloisonné réalisé en deux blocs emboîtés et poutre de pare-chocs comportant un tel absorbeur de chocs**
Verteilterstossdämpfer als zwei ineinanderpassende Blocks realisiert und Stossfängerträger mit einem solchen Stossdämpfer
Partitioned shock absorber made up of two nested blocks and beam of car bumper with such a shock absorber

(30) Priorité: 05.03.1999 FR 9902769
(43) Date de publication de la demande: 13.09.2000
(73) Titulaire: COMPAGNIE PLASTIC OMNIUM, 69007 Lyon (FR)
(72) Inventeur: Martinez, Bernard, 01460 Nurieux Volognat (FR); Cornet, Olivier, 01000 Bourg en Bresse (FR)
(74) Mandataire: Leszczynski, André

(56) Documents cités:
- EP-A- 0 705 994
- FR-A- 2 691 124
- US-A- 4 227 593
- US-A- 5 806 889

## Description

La présente invention concerne un absorbeur de chocs cloisonné réalisé en deux blocs emboîtés et une poutre de pare-chocs comportant un tel absorbeur de chocs.

On connaît déjà les absorbeurs de chocs cloisonnés, qui sont des structures de type nid d'abeilles, comportant un réseau de cloisons s'étendant parallèlement à une direction prédéterminée, appelée direction de chocs, et qui se déforment en cas de choc en absorbant l'énergie de l'impact.

De tels absorbeurs de chocs sont, par exemple, utilisés pour monter des poutres de pare-chocs sur des châssis de véhicules ou montés directement sur le châssis du véhicule. Lorsque le pare-chocs subit un choc dirigé sensiblement dans l'axe du véhicule, la poutre du pare-chocs se déplace vers l'intérieur du véhicule et l'énergie transmise par la poutre du pare-chocs est absorbée par les absorbeurs de chocs afin de protéger le reste du véhicule et surtout ses passagers.

Les absorbeurs de chocs cloisonnés réalisés jusqu'à présent étaient généralement obtenus par extrusion ou par injection.

Dans ce dernier cas, il existait une limite inférieure au pas du réseau de cloisons, qui est la distance séparant deux cloisons contiguës du réseau, du fait que le moule d'injection, et notamment les noyaux qui séparent les cloisons, doivent avoir une épaisseur minimale en dessous de laquelle ils ne résisteraient pas à la très importante pression d'injection qu'il est nécessaire d'exercer pour remplir correctement les cavités du moule existant entre les noyaux et délimitant l'empreinte desdites cloisons.

Pour l'injection, le pas du réseau doit d'ailleurs être d'autant plus élevé que la profondeur des cloisons dans la direction du choc est importante. Or, cette corrélation qui est imposée par l'injection entre la profondeur des cloisons et le pas du réseau est particulièrement défavorable à l'efficacité de l'absorbeur.

En effet, pour être efficace lors de chocs à haute énergie, il faudrait idéalement que la profondeur des cloisons soit importante et simultanément que la taille des alvéoles, c'est-à-dire le pas du réseau, soit diminuée.

De plus, une autre caractéristique des absorbeurs injectés nuit à leur efficacité : le fait que les cloisons doivent avoir une épaisseur décroissante en direction de l'extrémité des noyaux pour permettre le démoulage de l'absorbeur. Cette caractéristique a pour conséquence que l'absorbeur voit sa résistance augmenter à mesure de son enfoncement, phénomène connu sous le nom d'effet de dépouille, alors que davantage d'énergie serait absorbée si la résistance de l'absorbeur était maximale dès le début de sa déformation.

Il en résulte que les absorbeurs de chocs moulés réalisés jusqu'à ce jour offraient des conditions d'absorption d'énergie non satisfaisantes en raison de la relativement faible densité de leur réseau de cloisons et de leur rendement diminué par l'effet de dépouille.

La présente invention vise à fournir une solution pour réaliser, par moulage, des absorbeurs de chocs cloisonnés comportant un réseau de cloisons de haute densité et limitant l'effet de dépouille.

La présente invention a pour objet un absorbeur de chocs cloisonné comportant un réseau de cloisons s'étendant parallèlement à une direction de choc donnée, caractérisé par le fait qu'il est constitué par au moins deux blocs emboîtables l'un dans l'autre, chaque bloc comportant des cloisons, les cloisons de chaque bloc s'imbriquant avec celles de l'autre bloc pour reconstituer le réseau de cloisons de l'absorbeur.

En d'autres termes, la présente invention consiste à réaliser deux blocs ayant chacun son propre réseau de cloisons à densité relativement faible, ce qui permet notamment de les réaliser par moulage, et à emboîter ces deux blocs l'un dans l'autre en entremêlant leurs cloisons, ce qui a pour effet de doubler la densité du réseau de cloisons ainsi obtenu.

Dans un mode de réalisation préféré de l'invention, chaque bloc comprend un nombre de cloisons sensiblement égal à la moitié du nombre total de cloisons constituant le réseau de cloisons de l'absorbeur, ledit réseau, pris selon une direction perpendiculaire à la direction de choc, comportant alternativement une cloison d'un bloc et une cloison de l'autre bloc.

Dans un mode de réalisation particulier de l'invention, l'épaisseur des cloisons de chaque bloc va décroissant en direction de l'autre bloc, ce qui permet de réaliser le bloc par moulage et de ménager sur chaque cloison une dépouille facilitant le démoulage du bloc.

Etant donné que les deux blocs sont emboîtés en opposition l'un par rapport à l'autre, l'extrémité la plus mince des cloisons de chaque bloc côtoie la partie la plus épaisse des cloisons de l'autre bloc, de sorte qu'en toute section transversale de l'absorbeur, l'épaisseur moyenne des cloisons est constante.

On obtient ainsi une bonne homogénéité de l'absorbeur, ce qui se traduit par un rendement optimum aux chocs, étant donné que la résistance de l'absorbeur est sensiblement constante au cours de son écrasement.

Cette caractéristique permet d'effacer le phénomène connu sous le nom d'effet de dépouille.

Dans un mode de réalisation préféré de l'invention, les cloisons de chaque bloc sont fendues sur une moitié de leur longueur pour permettre leur enchevêtrement avec celles de l'autre bloc.

Ainsi, deux cloisons perpendiculaires appartenant, l'une au premier bloc, l'autre au second bloc, peuvent se maintenir mutuellement, la fente de chaque cloison recevant la partie non fendue de l'autre cloison et réciproquement.

Dans une variante de ce mode de réalisation, chaque cloison comporte, en bordure de sa fente, des nervures de rigidification qui ont pour fonctions de compenser l'affaiblissement dû à la présence de la fente et de maintenir la perpendicularité de la cloison avec la cloison qui s'engage dans la fente. Cette dernière cloison peut d'ailleurs également comporter des nervures de part et d'autre de sa région devant être emprisonnée dans la fente, pour immobiliser ladite région dans la fente et maintenir la perpendicularité des deux cloisons.

Dans un mode de réalisation particulier de l'invention, l'absorbeur est constitué par :
- un premier bloc comportant un premier jeu de cloisons,
- un deuxième bloc comportant un premier côté porteur d'un deuxième jeu de cloisons apte à s'imbriquer avec le premier jeu de cloisons par emboîtement du premier bloc dans le premier côté du deuxième bloc, et un second côté, opposé au premier, porteur d'un troisième jeu de cloisons et
- un troisième bloc comportant un quatrième jeu de cloisons apte à s'imbriquer avec le troisième jeu de cloisons par emboîtement du troisième bloc dans le second côté du deuxième bloc.

Un tel absorbeur à trois blocs peut aussi être défini comme étant constitué par deux absorbeurs de chocs comprenant chacun deux blocs emboîtés l'un dans l'autre, l'un des blocs du premier absorbeur de chocs étant accolé dos-à-dos avec l'un des blocs du deuxième absorbeur de chocs pour former le deuxième bloc selon la définition ci-dessus.

Un tel absorbeur de chocs à trois blocs présente l'avantage de pouvoir s'étendre sur une longueur relativement importante dans la direction du choc, grâce au fait que la longueur de ses cloisons n'est, en réalité, que la moitié de la longueur totale de l'absorbeur.

La présente invention a également pour objet une poutre de pare-chocs comportant un absorbeur de chocs intégré, caractérisé par le fait qu'elle comporte une partie constituant l'un des blocs de l'absorbeur de chocs tel que décrit ci-dessus.

Dans un mode de réalisation particulier, cette poutre est associée à un bloc complémentaire à celui constitué par une partie de la poutre et ce bloc complémentaire présente, sur sa face avant débouchant vers l'avant du véhicule, une paroi en escalier qui ne comporte que des portions perpendiculaires aux cloisons des blocs, réunies entre elles par des portions parallèles aux cloisons des blocs.

La forme en escalier permet à la paroi avant du bloc complémentaire de suivre sensiblement la courbure de la face avant de la poutre mais préserve les blocs de contraintes obliques qui nuiraient à la bonne efficacité de l'absorbeur.

Une telle poutre peut notamment comporter un absorbeur de chocs en trois blocs. Dans ce cas, le bloc qui fait partie intégrante de la poutre est le deuxième bloc, c'est-à-dire celui qui comporte un premier côté porteur du deuxième jeu de cloisons et un second côté, opposé au premier, porteur du troisième jeu de cloisons.

Dans le but de mieux faire comprendre l'invention, on va en décrire maintenant des modes de réalisation donnés à titre d'exemples non limitatif de la portée de l'invention, en référence au dessin dans lequel :
- la figure 1 est une vue en perspective éclatée d'un absorbeur de chocs selon un premier mode de réalisation de l'invention,
- les figures 2A et 2B sont des sections transversales selon IIA-IIA et IIB-IIB de l'absorbeur à l'état assemblé,
- les figures 3A et 3B sont des sections longitudinales selon IIIA-IIIA et IIIB-IIIB du même absorbeur à l'état assemblé,
- la figure 4 est une vue schématique d'un absorbeur de chocs de l'état de la technique antérieur pris à titre de comparaison,
- la figure 5 est une vue analogue à la figure 4 après compression de l'absorbeur de chocs,
- la figure 6 est un graphique illustrant l'effet de dépouille sur l'absorbeur de chocs de l'état de la technique,
- la figure 7 est une vue schématique de l'absorbeur de chocs des figures 1 à 3,
- la figure 8 est une vue analogue à la figure 7 montrant l'absorbeur de chocs après compression,
- la figure 9 est un graphique illustrant l'absence d'effet de dépouille sur l'absorbeur,
- la figure 10 est une vue en perspective éclatée de la portion avant droite de la structure d'un véhicule automobile,
- la figure 11 est une vue en coupe selon XI-XI de la figure 10,
- la figure 12 est une vue en perspective de la structure avant gauche à l'état monté du véhicule,
- la figure 13 est une vue rapprochée et en perspective d'une partie des cloisons d'un absorbeur selon un autre mode de réalisation de l'invention,
- la figure 13A est une vue en coupe selon XIIIA-XIIIA de l'absorbeur de la figure 13,
- la figure 14 est une vue rapprochée et en perspective d'une partie des cloisons d'un absorbeur selon un autre mode de réalisation de l'invention,
- la figure 14A est une vue en coupe selon XIVA- XIVA de l'absorbeur de la figure 14.

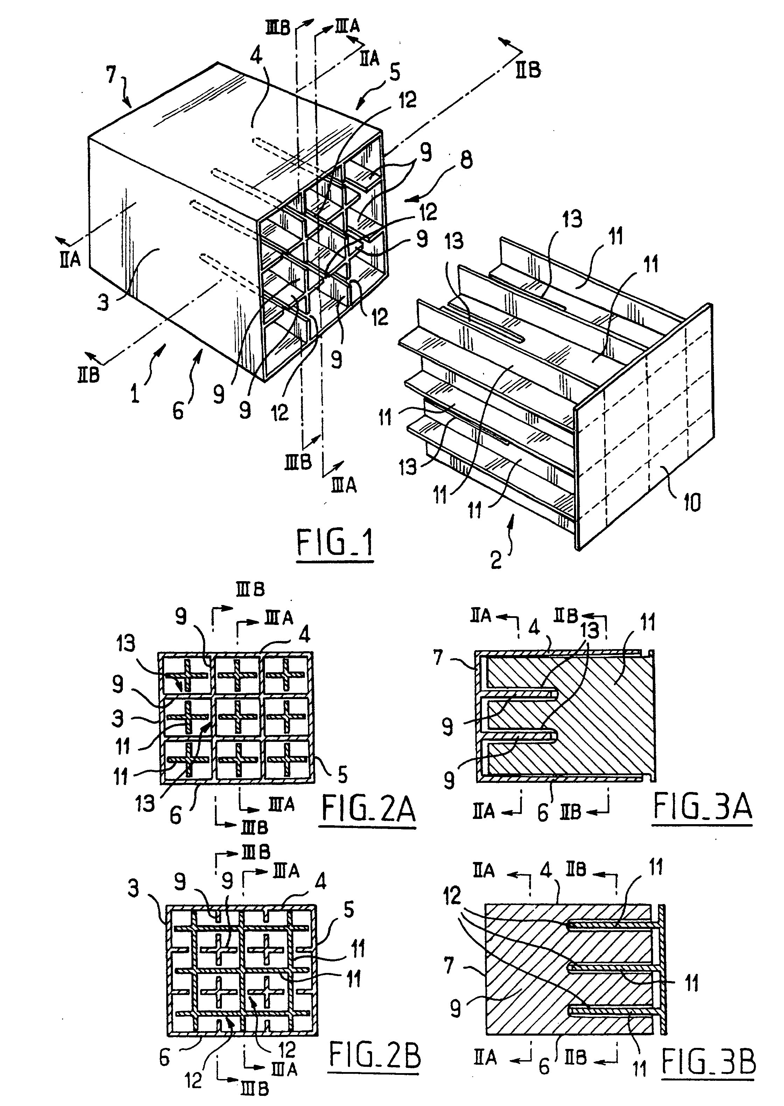

L'absorbeur représenté à la figure 1 présente une forme extérieure parallélépipédique. Il comprend deux blocs, à savoir un bloc «femelle » 1 et un bloc «mâle » 2.

Le bloc femelle 1 comprend quatre grandes faces latérales 3, 4, 5, 6 et une petite face 7 d'un seul côté. Il est ouvert sur son côté opposé 8. Il est muni intérieurement d'un réseau de cloisons 9 qui s'étendent depuis la petite face 7 parallèlement aux grandes faces et sont par conséquent perpendiculaires entre elles.

Les cloisons définissent entre elles des alvéoles de sections carrées.

Bien entendu, on ne sortirait pas du cadre de l'invention en choisissant un absorbeur ayant des alvéoles de sections différentes, par exemple hexagonales, rectangulaires, triangulaires ou circulaires.

Le pas du réseau de cloisons du bloc femelle est compatible avec une réalisation de ce bloc par moulage.

Le bloc mâle 2 comprend une seule petite face 10 et un réseau de cloisons 11 s'étendant depuis cette petite face perpendiculairement à la direction de choc et définissant entre elles des alvéoles de sections carrées.

L'écartement des cloisons deux à deux, ou pas du réseau, est identique dans les blocs femelle 1 et mâle 2, mais l'agencement des cloisons sur la petite face qui les supporte est décalé d'un demi-pas dans les deux directions transversales parallèles aux cloisons.

Les cloisons de chaque bloc s'amincissent en direction de l'autre bloc, ce qui constitue une dépouille utile au démoulage de chaque bloc, mais les parties minces des cloisons d'un bloc côtoient les parties épaisses des cloisons de l'autre bloc, se compensant ainsi mutuellement.

Dans leur moitié située du côté de l'autre bloc, les cloisons 9, 11 de chaque bloc comportent une fente longitudinale 12, 13 débouchant en direction de l'autre bloc.

Ces fentes permettent aux cloisons de s'enchevêtrer deux à deux au moment de l'emboîtement du bloc mâle dans le bloc femelle, ce qui a pour effet de rigidifier l'absorbeur ainsi obtenu.

On voit sur les figures 2A et 2B que le réseau de cloisons de l'absorbeur a une densité de cloisons double de celle de chaque bloc.

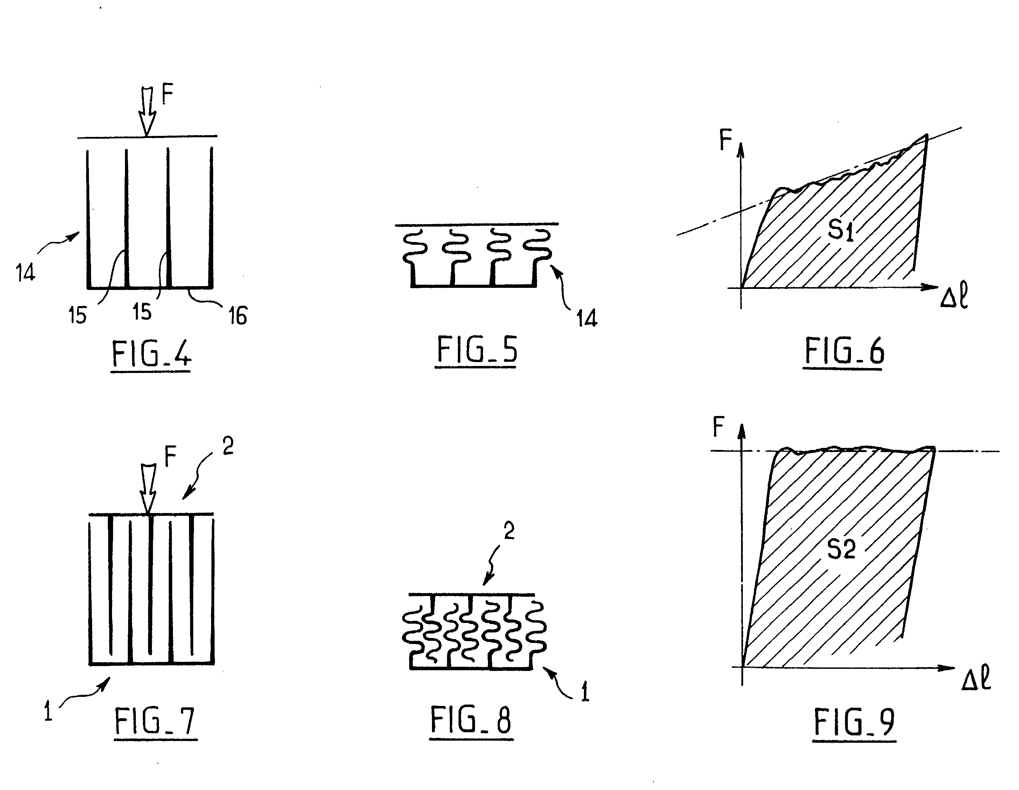

Les figures 4 à 6 fournissent un exemple comparatif d'un absorbeur 14 en un seul bloc dont les cloisons 15 ont une épaisseur décroissante à mesure que l'on s'éloigne de leur base 16 en raison de la nécessité de prévoir une dépouille permettant le démoulage de l'absorbeur.

Un choc frontal subi par l'absorbeur se traduit par l'exercice d'une force F qui comprime l'absorbeur jusqu'à l'amener à la position représentée à la figure 5.

Sur le graphique de la figure 6, on a représenté la force F qu'il est nécessaire d'exercer sur l'absorbeur pour obtenir une diminution de longueur Δl de ce dernier.

On voit que la courbe traduisant le lien entre cette force et le rétrécissement de l'absorbeur présente une partie sensiblement affine (marquée par un trait mixte) qui traduit l'effet de dépouille.

En effet, pour une force de compression relativement faible, les cloisons de l'absorbeur commencent à se déformer dans leur partie terminale de moindre épaisseur.

A mesure que la longueur de l'absorbeur diminue, la déformation gagne des parties d'épaisseurs plus importantes des cloisons, jusqu'à atteindre une force de compression maximale.

Cet effet de dépouille nuit à l'efficacité de l'absorbeur, ce que la figure 6 traduit en montrant une surface S1, comprise entre la courbe de la force et l'axe des abscisses, en forme de trapèze.

Avec l'absorbeur de chocs des figures 1 à 3, cet effet de dépouille est éliminé.

En effet, l'absorbeur, représenté à l'état non déformé à la figure 7 et à l'état déformé à la figure 8, fournit une courbe de force en fonction de la déformation présentant un «plat » (marqué par un trait mixte), ce qui signifie que la force exercée sur l'absorbeur pour le déformer est sensiblement constante quel que soit le niveau de déformation de cet absorbeur.

Par conséquent, l'absorbeur est efficace dès ses premières déformations, ce qui se traduit sur la figure 9 par une surface S2 rectangulaire.

Le nombre de cloisons étant deux fois plus important, pour un encombrement extérieur identique, il faut exercer une force de compression deux fois plus importante que précédemment pour déformer l'absorbeur.

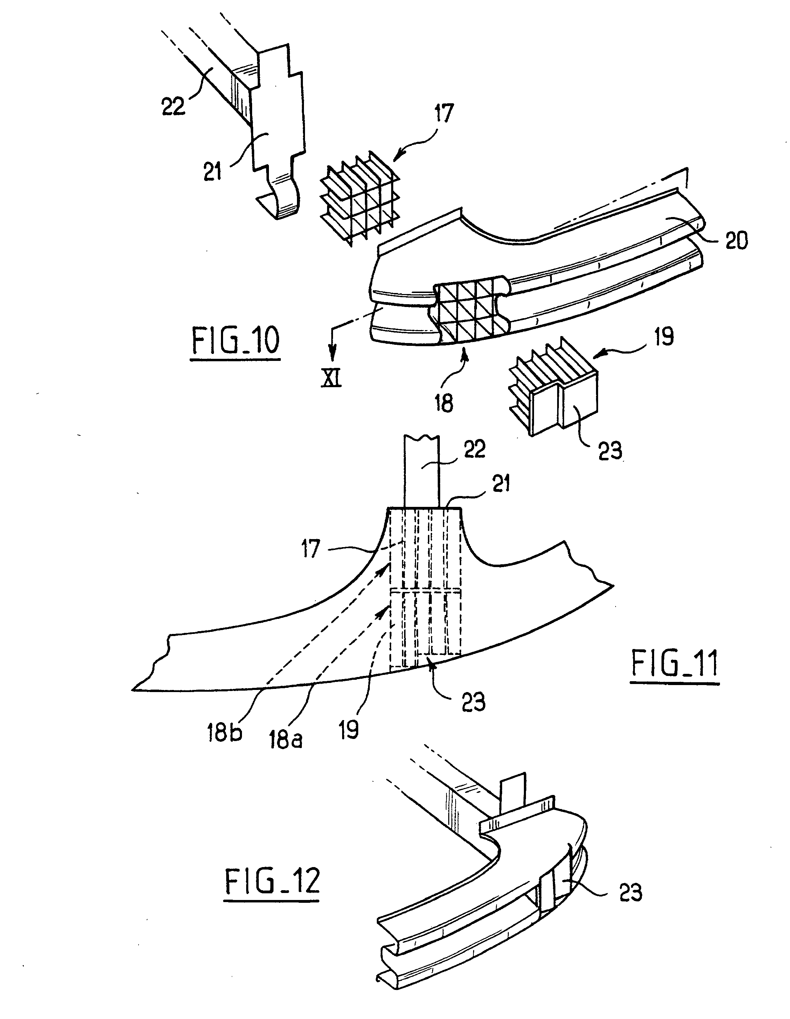

Dans le mode de réalisation des figures 10 à 12, l'absorbeur de chocs est réalisé en trois blocs 17, 18, 19, l'un de ces blocs (18) faisant partie intégrante d'une poutre de pare-chocs 20.

L'ensemble est monté sur une platine métallique 21 solidaire du châssis 22 du véhicule.

La structure en trois blocs 17, 18, 19 de l'absorbeur de chocs est mieux visible sur la figure 11, où l'on voit que le bloc 18, qui fait partie intégrante de la poutre 20, forme en réalité deux blocs femelles 18a, 18b disposés dos-à-dos, l'un étant dirigé vers l'avant du véhicule, l'autre vers l'arrière, c'est-à-dire vers le châssis.

Chacun de ces deux blocs est destiné à recevoir par emboîtement un bloc extérieur mâle 17, 19.

Le bloc mâle avant 19 est désigné premier bloc tandis que le bloc mâle arrière est désigné troisième bloc.

Cette structure en trois morceaux de l'absorbeur permet d'atteindre des longueurs, dans l'axe du véhicule, relativement importantes pour un absorbeur de chocs cloisonné, c'est-à-dire jusqu'à 300 mm.

On remarque que la paroi avant 23 du deuxième bloc 18 est conformée en escalier pour ne pas dépasser de la face frontale de la poutre.

Cette forme en escalier et non en suivant la courbure de la poutre a pour but de maintenir une paroi avant n'ayant que des portions parallèles ou perpendiculaires aux cloisons afin d'éviter qu'en cas de choc frontal subi par la poutre dans le prolongement du châssis 22, l'impact sur l'absorbeur ne se traduise par une force de compression ayant une composante oblique du fait de la courbure de la poutre au niveau de l'absorbeur.

Cette composante oblique pourrait en effet entraîner le pliage de l'absorbeur qui se coucherait comme un parallélogramme déformable.

La face frontale du bloc 19, qui supporte son réseau de cloisons, est également conformée en escaliers.

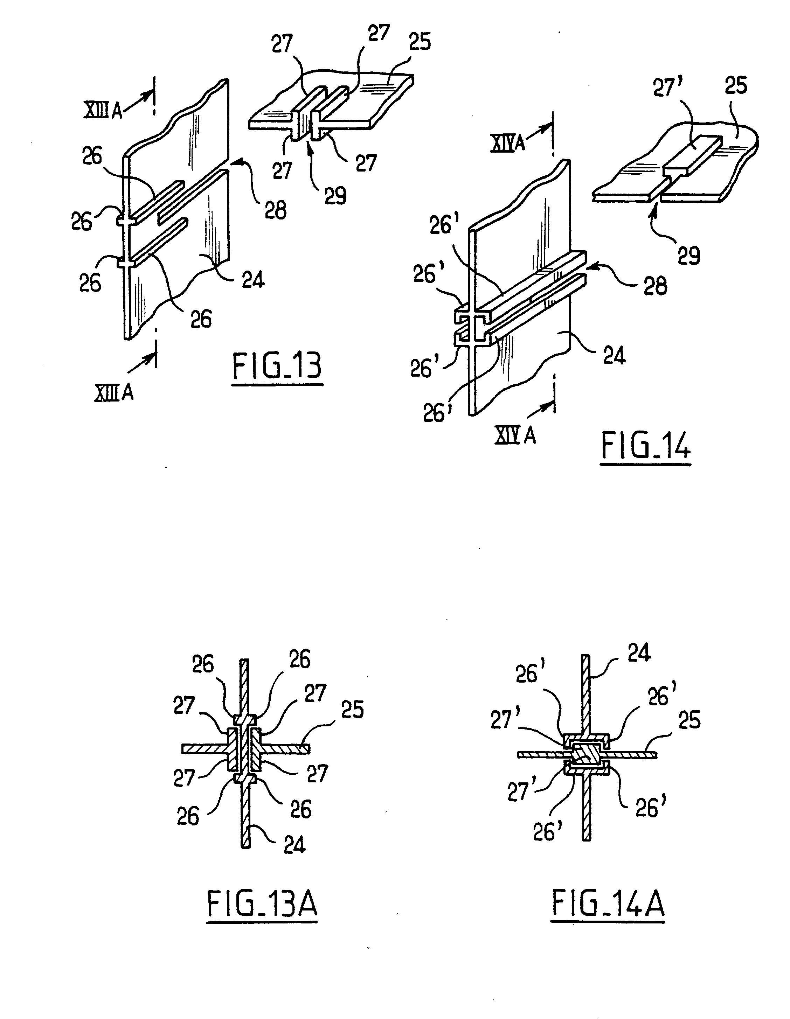

Dans le mode de réalisation des figures 13 et 13A, les cloisons 24 et 25 de chaque bloc sont munies de nervures de rigidification 26,27 au voisinage de leurs fentes 28,29.

Plus précisément, en bordure de sa fente 29, chaque cloison 25 comporte des nervures de rigidification 27 qui ont pour fonctions de compenser l'affaiblissement de la cloison dû à la présence de la fente et de maintenir la perpendicularité de la cloison 25 avec la cloison 24 qui s'engage dans la fente 29.

De son côté, de part et d'autre de sa région devant être emprisonnée dans la fente 29 de l'autre cloison 25, chaque cloison 24 comporte des nervures 26 dont la fonction est d'immobiliser ladite région dans la fente 29 tout en maintenant la perpendicularité des deux cloisons.

Dans le mode de réalisation des figures 14 et 14A, on retrouve les mêmes parties constitutives que précédemment les nervures 26' et 27' étant conformées d'une manière différente visant à accroître la rigidité des cloisons au voisinage des fentes par une meilleure imbrication des nervures 26' et 27' entre elles.

Il est bien entendu que les modes de réalisation qui viennent d'être décrits ne présentent aucun caractère limitatif et qu'ils pourront recevoir toutes modifications désirables sans sortir pour cela du cadre de l'invention.

## Revendications

1. Absorbeur de chocs cloisonné comportant un réseau de cloisons (9, 11 ; 24, 25) s'étendant parallèlement à une direction de choc donnée, **caractérisé par le fait qu'**il est constitué par au moins deux blocs (1, 2; 17, 18, 19) emboîtables l'un dans l'autre, chaque bloc comportant des cloisons, les cloisons de chaque bloc s'imbriquant avec celles de l'autre bloc pour reconstituer le réseau de cloisons de l'absorbeur.

2. Absorbeur selon la revendication 1, **caractérisé par le fait que** chaque bloc (1, 2; 17, 18, 19) comprend un nombre de cloisons sensiblement égal à la moitié du nombre total de cloisons constituant le réseau de cloisons de l'absorbeur, ledit réseau, pris selon une direction perpendiculaire à la direction de choc, comportant alternativement une cloison d'un bloc et une cloison de l'autre bloc.

3. Absorbeur selon l'une quelconque des revendications 1 et 2, **caractérisé par le fait que** l'épaisseur des cloisons (9, 11; 24, 25) de chaque bloc va décroissant en direction de l'autre bloc.

4. Absorbeur selon l'une quelconque des revendications 1 à 3, **caractérisé par le fait que** les cloisons (9, 11 ; 24, 25) de chaque bloc sont fendues (12, 13 ; 28, 29) sur une moitié de leur longueur pour permettre leur enchevêtrement avec celles de l'autre bloc.

5. Absorbeur selon la revendication 4, **caractérisé par le fait que** chaque cloison (25) comporte, en bordure de sa fente (29), des nervures de rigidification (27 ; 27') qui ont pour fonctions de compenser l'affaiblissement dû à la présence de la fente et de maintenir la perpendicularité de la cloison avec la cloison (24) qui s'engage dans la fente.

6. Absorbeur selon la revendication 5, **caractérisé par le fait que** chaque cloison (24) comporte des nervures (26 ; 26') de part et d'autre de sa région devant être emprisonnée dans la fente (29) de l'autre cloison (25), pour immobiliser ladite région dans la fente et maintenir la perpendicularité des deux cloisons.

7. Absorbeur selon l'une quelconque des revendications 1 à 6, **caractérisé par le fait qu'**il est constitué par :
- un premier bloc (17) comportant un premier jeu de cloisons,
- un deuxième bloc (18) comportant un premier côté (18a) porteur d'un deuxième jeu de cloisons apte à s'imbriquer avec le premier jeu de cloisons par emboîtement du premier bloc dans le premier côté du deuxième bloc, et un second côté (18b), opposé au premier, porteur d'un troisième jeu de cloisons, et
- un troisième bloc (19) comportant un quatrième jeu de cloisons apte à s'imbriquer avec le troisième jeu de cloisons par emboîtement du troisième bloc dans le second côté du deuxième bloc.

8. Poutre de pare-chocs comportant un absorbeur de chocs intégré, **caractérisé par le fait qu'**elle comporte une partie (18) constituant l'un des blocs d'un absorbeur de chocs selon l'une quelconque des revendications 1 à 7.

9. Poutre de pare-chocs selon la revendication 8, **caractérisé par le fait que** le bloc (19) complémentaire à celui constitué par une partie de la poutre présente, sur sa face avant débouchant vers l'avant du véhicule, une paroi (23) en escalier qui ne comporte que des portions perpendiculaires aux cloisons des blocs, réunies entre elles par des portions parallèles aux cloisons des blocs.

## Patentansprüche

1. Durch Zwischenwände geteilter Stoßdämpfer mit einem Netz von Zwischenwänden (9, 11; 24, 25), welche parallel zu einer vorgegebenen Stoßrichtung verlaufen, **dadurch gekennzeichnet, dass** er von wenigstens zwei ineinander steckbaren Blöcken (1, 2; 17, 18, 19) gebildet ist, wobei jeder Block Zwischenwände enthält, wobei sich die Zwischenwände jedes Blocks mit denjenigen des anderen Blocks verschachteln, um das Netz von Zwischenwänden des Dämpfers wiederherzustellen.

2. Dämpfer nach Anspruch 1, **dadurch gekennzeichnet, dass** jeder Block (1, 2; 17, 18, 19) eine Anzahl von Zwischenwänden aufweist, die im Wesentlichen gleich der Hälfte der Gesamtzahl von Zwischenwänden ist, welche das Netz von Zwischenwänden des Dämpfers bilden, wobei das genannte Netz - entlang einer Richtung senkrecht zur Stoßrichtung - abwechselnd eine Zwischenwand eines Blocks und eine Zwischenwand des anderen Blocks enthält.

3. Dämpfer nach irgendeinem der Ansprüche 1 und 2, **dadurch gekennzeichnet, dass** die Dicke der Zwischenwände (9, 11; 24, 25) jedes Blocks in Richtung des anderen Blocks abnimmt.

4. Dämpfer nach irgendeinem der Ansprüche 1 ä 3, **dadurch gekennzeichnet, dass** die Zwischenwände (9, 11; 24, 25) jedes Blocks über eine Hälfte ihrer Länge geschlitzt (12, 13; 28, 29) sind, um ihre Verzahnung mit denjenigen des anderen Blocks zu ermöglichen.

5. Dämpfer nach Anspruch 4, **dadurch gekennzeichnet, dass** jede Zwischenwand (25) am Rand ihres Schlitzes (29) Versteifungsrippen (27; 27') aufweist, deren Aufgabe es ist, die durch das Vorhandensein des Schlitzes bedingte Schwächung zu kompensieren und die senkrechte Stellung der Zwischenwand mit der Zwischenwand (24), welche in den Schlitz eingreift, aufrechtzuerhalten.

6. Dämpfer nach Anspruch 5, **dadurch gekennzeichnet, dass** jede Zwischenwand (24) auf beiden Seiten ihres Bereiches, welcher in den Schlitz (29) der anderen Zwischenwand (25) eingeschlossen werden soll, Rippen (26; 26') aufweist, um den genannten Bereich in dem Schlitz festzulegen und um die senkrechte Stellung der beiden Zwischenwände aufrechtzuerhalten.

7. Dämpfer nach irgendeinem der Ansprüche 1 à 6, **dadurch gekennzeichnet, dass** er gebildet ist von:
- einem ersten Block (17) mit einem ersten Satz von Zwischenwänden,
- einem zweiten Block (18) mit einer ersten Seite (18a), welche einen zweiten Satz von Zwischenwänden trägt, der geeignet ist, sich mit dem ersten Satz von Zwischenwänden durch Einstecken des ersten Blocks in die erste Seite des zweiten Blocks zu verschachteln, sowie einer der ersten gegenüberliegenden zweiten Seite (18b), welche einen dritten Satz von Zwischenwänden trägt, und
- einem dritten Block (19) mit einem vierten Satz von Zwischenwänden, der geeignet ist, sich mit dem dritten Satz von Zwischenwänden durch Einstecken des dritten Blocks in die zweite Seite des zweiten Blocks zu verschachteln.

8. Stoßstangenträger mit einem integrierten Stoßdämpfer, **dadurch gekennzeichnet, dass** er ein Teil (18) aufweist, das einen der Blöcke eines Stoßdämpfers nach irgendeinem der Ansprüche 1 bis 7 bildet.

9. Stoßstangenträger nach Anspruch 8, **dadurch gekennzeichnet, dass** der Block (19), welcher zu dem von einem Teil des Trägers gebildeten Block komplementär ist, an seiner zum Vorderteil des Fahrzeugs mündenden Vorderseite eine treppenförmige Wand (23) aufweist, die nur senkrecht zu den Zwischenwänden der Blöcke verlaufende Abschnitte enthält, welche durch parallel zu den Zwischenwänden der Blöcke verlaufende Abschnitte untereinander verbunden sind.

## Claims

1. A partitioned impact absorber comprising an array of partitions (9, 11; 24, 25) extending parallel to a given impact direction, **characterized by** the fact that it is constituted by at least two mutually-engageable blocks (1, 2; 17, 18, 19), each block having partitions, the partitions of each block interfitting between the partitions of the other block so as to build up the array of partitions of the absorber.

2. An absorber according to claim 1, **characterized by** the fact that each block (1, 2; 17, 18, 19) comprises a number of partitions that is substantially half the total number of partitions constituting the array of partitions of the absorber, said array in a direction perpendicular to the impact direction comprising, in alternation, a partition from one block and a partition from the other block.

3. An absorber according to claim 1 or 2, **characterized by** the fact that the thickness of the partitions (9, 11; 24, 25) of each block tapers towards the other block.

4. An absorber according to any one of claims 1 to 3, **characterized by** the fact that the partitions (9, 11; 24, 25) of each block are slotted (12, 13; 28, 29) over half their length so as to enable them to interlock with the partitions of the other block.

5. An absorber according to claim 4, **characterized by** the fact that, on the border of its slot (29), each partition (25) has stiffening ribs (27; 27') having the function of compensating for the weakening due to the presence of the slot and of keeping the partition and the partition (24) that engages in the slot mutually perpendicular.

6. An absorber according to claim 5, **characterized by** the fact that each partition (24) has ribs (26; 26') on either side of its region that is to be held captive in the slot (29) of the other partition (25) so as to prevent said region in the slot from moving and so as to maintain perpendicularity between the two partitions.

7. An absorber according to any one of claims 1 to 6, **characterized by** the fact that it is constituted by:
· a first block (17) having a first set of partitions;
· a second block (18) having a first side (18a) carrying a second set of partitions suitable for interfitting with the first set of partitions by the first block being engaged in the first side of the second block, and a second side (18b) opposite from its first side and carrying a third set of partitions; and
· a third block (19) having a fourth set of partitions suitable for interfitting with the third set of partitions by the third block engaging in the second side of the second block.

8. A bumper beam including an integral impact absorber, the beam being **characterized by** the fact that it includes a portion (18) constituting one of the blocks of an impact absorber according to any one of claims 1 to 7.

9. A bumper beam according to claim 8, **characterized by** the fact that the block (19) additional to the block constituted by a portion of the beam presents, on its front face opening towards the front of the vehicle, a staircase-shaped wall (23) comprising only portions that are perpendicular to the partitions of the block, which portions are interconnected by portions parallel to the partitions of the blocks.
